# EUROPÄISCHE PATENTSCHRIFT

(11) **EP 0 547 313 B1**
(45) Veröffentlichungstag und Bekanntmachung des Hinweises auf die Patenterteilung: **20.12.1995**
(21) Anmeldenummer: 92117150.0
(22) Anmeldetag: 08.10.1992
(51) Int. Cl.: B60B 23/00

(54) **Felge und ein Verfahren zum Herstellen der Felge**
Rim and method to fabricate
Jante et méthode de fabrication

(30) Priorität: 23.11.1991 DE 4138558
(43) Veröffentlichungstag der Anmeldung: 23.06.1993
(73) Patentinhaber: Dr.Ing.h.c. F. Porsche Aktiengesellschaft, 70435 Stuttgart (DE)
(72) Erfinder: Stach, Jens, W-7252 Weil der Stadt (DE)

(56) Entgegenhaltungen:
- EP-A- 0 004 679
- FR-A- 2 347 124
- PATENT ABSTRACTS OF JAPAN vol. 01, no. 7177 (M-1393)6. April 1993 & JP-A-04 334 601 (MAZDA MOTOR CO.)

## Beschreibung

Die Erfindung bezieht sich auf eine Felge und ein Verfahren zum Herstellen der Felge nach dem Oberbegriff des Anspruchs 1. Ein solches Verfahren entspricht dem internen Stand der Technik des Anmelders.

Bei Radfelgen für Kraftfahrzeuge aus Druckguß ist aufgrund der Einteiligkeit zwischen Radschüssel und Felgenbett ein komplizierter Sandkern im Kokillenwerkzeug erforderlich, um eine gewichtsmäßig leichte Felge in einfacher Gießtechnik herstellen zu können. Bei diesen Felgen mit direkter Anbindung an das Felgenhorn sind im Bereich der Speichenanbindung an das Felgenbett Materialanhäufungen erforderlich und das Gießen beliebig breiter Felgenformate ist begrenzt. Auch die Anordnung der Sandkernteile zwischen den Kernen des Kokillenwerkzeugs zur Bildung von Hohlspeichen mit gleichbleibenden Wandstärken ist aufgrund einer ungenügend gesicherten Kernlagerung nur unzulänglich möglich.

Aufgabe der Erfindung ist es, eine Felge und ein Verfahren zum Herstellen der Felge zu schaffen, die in einfacher Weise in verschiedenen Dimensionen und gewichtsmäßig leicht herstellbar ist.

Diese Aufgabe wird erfindungsgemäß durch die kennzeichnenden Merkmale der Ansprüche 1 und 2 gelöst. Weitere vorteilhafte Merkmale beinhalten die Unteransprüche.

Die mit der Erfindung hauptsächlich erzielten Vorteile bestehen darin, daß zwei getrennte Bauelemente der Felge miteinander verbindbar sind und somit der Gießvorgang für die Radschüssel mit einem vereinfacht zu lagernden Sandkern im Unterkern des Kokillenwerkzeugs, der zudem noch präzise zu lagern ist, möglich wird. Das Felgenbett kann somit in anderer Verfahrensweise, z.B. durch Strangpressen oder durch Warmumformung eines Rohlings hergestellt werden, so daß ein kompliziertes Kokillenwerkzeug entfällt. Auch können durch die andere Herstellungsweise des Felgenbettes als die Felgenschüssel beliebig breite Felgenformate hergestellt werden und das Felgenbett kann dann auch aus einem anderen Werkstoff wie die Radschüssel bestehen, was wesentliche Gewichtsvorteile mit sich bringt.

Aufgrund der Trennung der Radschüssel vom Felgenbett bei der Herstellung der beiden Elemente wird eine bessere Gießbarkeit der Radschüssel erzielt und zudem ist hierdurch eine gute Sandkernlagerung zur Bildung von Hohlspeichen mit geringem und unbedingt gleichbleibenden dicken Wandstärken möglich.

Die beiden Elemente der Felge, wie die Radschüssel und das Felgenbett werden über eine Reibschweißung miteinander unlösbar verbunden. Hierzu weist die Radschüssel an der Innenseite im Bereich des Felgenraumes zwei Wandungen mit stirnseitigen Schweißflächen auf, denen entsprechende Schweißflächen am Felgenbett gegenüberstehen. Zwischen den Wandungen beider Elemente wird ein geschlossener Ringkanal gebildet, der mit dem Raum der Hohlspeiche verbunden ist. Hierdurch bildet das Felgenbett einen dichten Abschluß gegenüber dem aufgezogenen Reifen und eine separate Abdichtung eines in das Felgenbett einmündenden Raumes der Hohlspeiche.

Die Schweißflächen an den Stirnseiten der Wandungen der beiden Elemente können je nach den Gegebenheiten entweder in einer gemeinsamen Ebene oder aber in verschiedenen Ebenen angeordnet sein. Dies ist baubedingt und ist abhängig von der Lage des Humps am Felgenbett.

Die Abstützung der Sandkerne zur Herstellung der Felge ist insbesondere im Bereich der Hohlspeichen in verschiedenen Arten gemäß der Ansprüche 9, 10 und 11 möglich, was in Abhängigkeit von der Ausbildung der Hohlspeichen erfolgt, ob diese sich z.B. unmittelbar bis zur Nabe durchgehend erstrecken, im Abstand zur Nabe enden, in den Befestigungsbohrungen der Felgen enden oder vor den Befestigungsbohrungen abgeschlossen sind. In jeder dieser Fälle ist ein Sandkern in den Hohlspeichen zur Bildung der Hohlspeichen möglich, der durch seine präzise Abstützung eine gleichbleibend relativ dünne Wandstärke von 3,5 bis 4 mm bewirkt.

Ausführungsbeispiele der Erfindung sind in der Zeichnung dargestellt und werden im folgenden näher beschrieben.

Es zeigen
- Fig. 1: eine Felge im Schnitt durch eine Hohlrippe,
- Fig. 2: einen Teilausschnitt der Felge im Bereich einer Luftöffnung mit den Schweißflächen,
- Fig. 3: einen Schnitt nach der Linie III-III der Fig. 2 mit Schweißflächen,
- Fig. 4 bis 7: verschiedene Anordnungen der Sandkerne im Kokillenwerkzeug zur Bildung der Hohlspeichen und
- Fig. 8: eine beispielsweise Ausführung von Felgenschüssel und Felgenbett zum Reibschweißen .

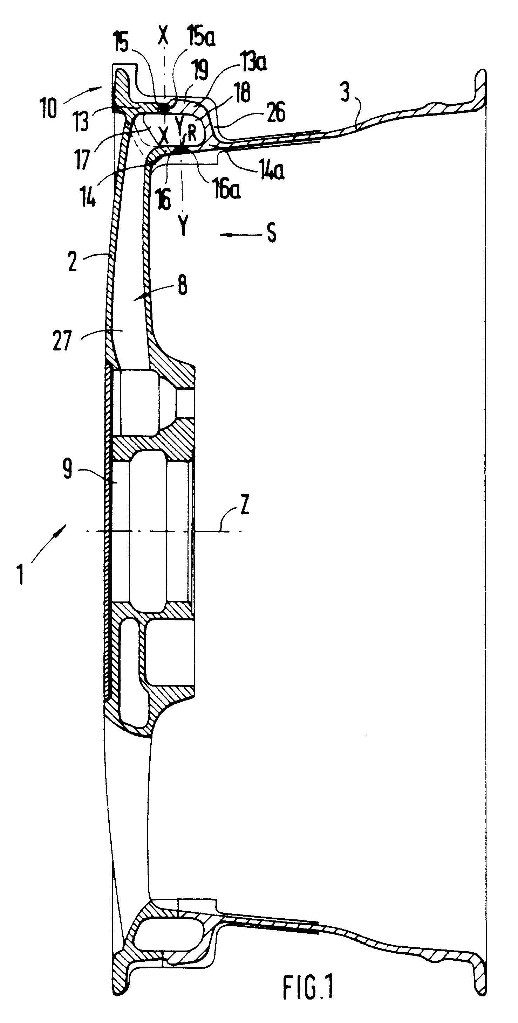

Eine Felge 1 gemäß Fig. 1 besteht im wesentlichen aus zwei Teilen, einer Felgenschüssel 2 und einem Felgenbett 3. Diese beiden Teile werden in verschiedenen Verfahren hergestellt und miteinander über eine Reibschweißung R verbunden. Die Felgenschüssel 2 besteht beispielsweise aus einer Aluminiumlegierung und wird im Druckguß in einem Kokillenwerkzeug hergestellt und das Felgenbett 3 wird entweder aus einem gegossenen Rohling, durch Warmumformung auf einer Rollendruckmaschine hergestellt oder es kann auch aus einem stranggepreßten Rohrstück gefertigt werden.

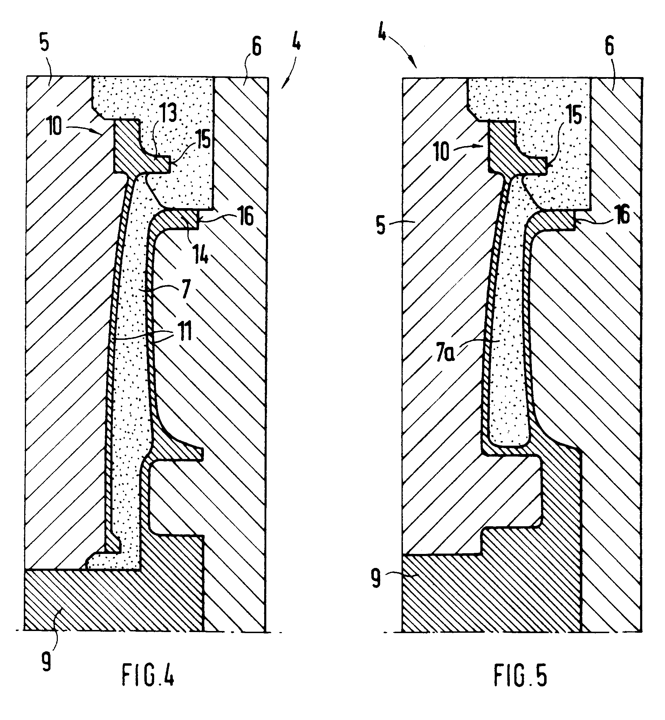

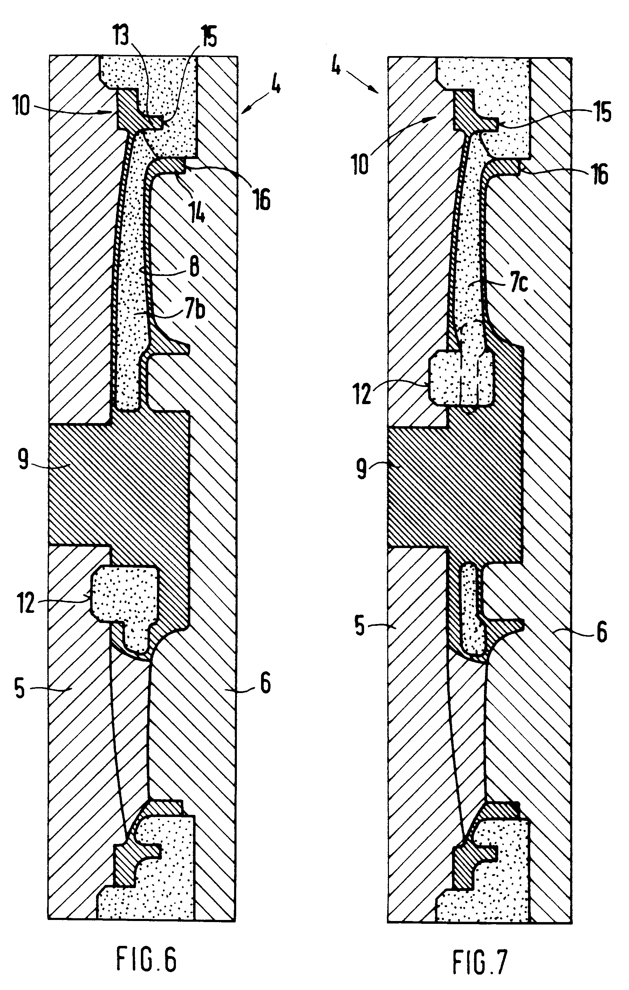

Die Felgenschüssel 2 wird, wie die Fig. 4 bis 7 beispielsweise zeigen, in einem Kokillenwerkzeug 4, das aus einem Unterkern 5 und einem Oberkern 6 besteht, gegossen. Zur Erzielung der Felge 1 ist zwischen den Kernen 5 und 6 ein Sandkern 7 angeordnet. Dieser kann zur Bildung der Hohlspeichen 8 unterschiedlich am Unterkern 5 abgestützt sein. So zeigt Fig. 4 den Sandkern 7 mit einer Abstützung im Bereich der Nabe 9 sowie im Bereich des Felgenhornes 10. Im dazwischenliegenden Bereich von den Kernen 5 und 6 und dem Sandkern 7 ergeben sich die Wandungen der Hohlspeichen 8. Bei der weiteren Ausführung gemäß Fig. 5 wird der Sandkern 7a fliegend gelagert, und zwar im Bereich des Felgenhornes 10. Eine weitere Lagerung im Bereich der Nabe 9 ist nicht vorgesehen. Weitere Möglichkeiten der Lagerung des Sandkernes 7b und 7c sind in den Fig. 6 und 7 dargestellt. Bei diesen Ausführungen ist der Sandkern 7b und 7c im Bereich des Felgenhornes 10 am Unterkern 5 sowie im Bereich von Ausnehmungen 12 von Befestigungsschrauben vorgesehen.

Der Sandkern 7 bis 7c ist im Bereich des Felgenhorns 10 so angeordnet, daß sich als konzentrische Kreisringe ausgebildete parallel liegende Wandungen 13 und 14 an der Felgenschüssel 2 ergeben, die stirnseitig jeweils ebene Schweißflächen 15 und 16 bilden, die korrespondierend zu weiteren Schweißflächen 15a und 16a an Wandungen 13a und 14a des Felgenbettes 3 liegen.

Diese Wandungen 13, 14 und 13a, 14a bilden zwischen sich einen Teilraum 17 und 18, der nach der Verschweißung der beiden Felgenteile 2 und 3 einen geschlossenen Ringraum ergibt.

Die Wandungen 13 und 13a liegen auf einem Kreisring mit einem größeren Durchmesser D als die Wandungen 14 und 14a auf dem Durchmesser d. Wie Fig. 1 näher zeigt, ist die Schweißfläche 15 beispielsweise an der Stirnseite der Wandung 13 in einer Ebene X-X angeordnet, die gegenüber der weiteren, in der Ebene Y-Y angeordnete Schweißfläche 16 zurückverlagert ist. Eine solche Ausführung ist erforderlich, damit der Hump 19 noch vollständig dem Felgenbett 3 zuzuordnen ist. Bei einer anderen Bemessung des Felgenbettes 3 können die Schweißflächen 15 und 16 auch in einer gemeinsamen Ebene angeordnet sein.

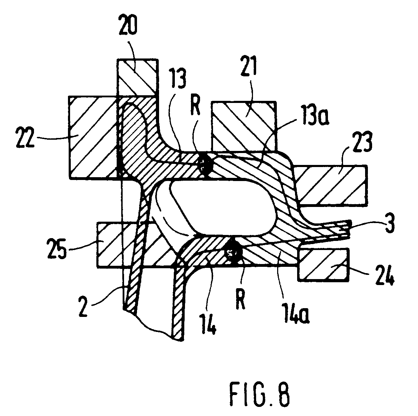

In Fig. 8 ist die Anordnung der Felgenteile 2 und 3 zur Reibschweißung R näher dargestellt. So wird die Felge 1 über Einrichtungen 20, 21 gespannt und über Anschläge 22 bis 25 gehalten. Durch Verdrehen eines der Felgenteile 2 und 3 erfolgt in bekannter weise eine Verbindung durch eine Reibschweißung R.

Die Herstellung des Felgenbettes 3 aus einem stranggepreßten Rohrstück erfolgt in der Weise, daß zur Bildung der Wandungen 13a und 14a mit den zugehörigen stirnseitigen Schweißflächen 15a und 16a das Rohrstück stirnseitig gespalten und nachfolgend das eigentlich Bett der Felge 1 mit einer Bearbeitungsschräge 26 fertiggestellt wird. Eine Nachbearbeitung der Flächen des Felgenbettes erfolgt durch Abdrehen.

Die Herstellung des Felgenbettes 3 aus einem gegossenen Rohling erfolgt durch Warmumformung, wobei das Bett der Felge 1 über mehrere Rollen in einer Druckmaschine zu einem profilierten Felgenbett 3 mit den Wandungen 13a und 14a und den Schweißflächen 15a und 16a geformt wird.

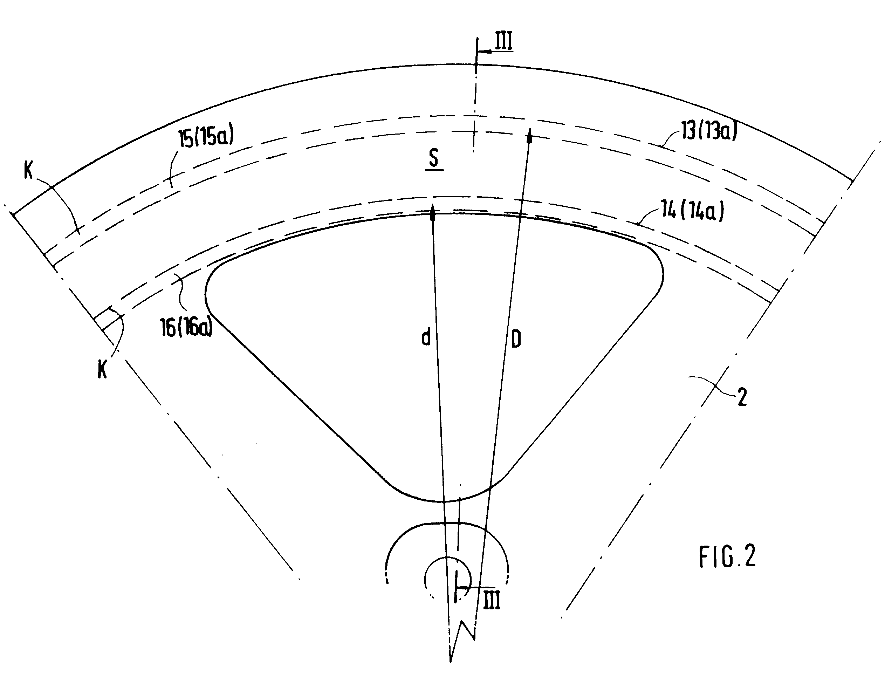

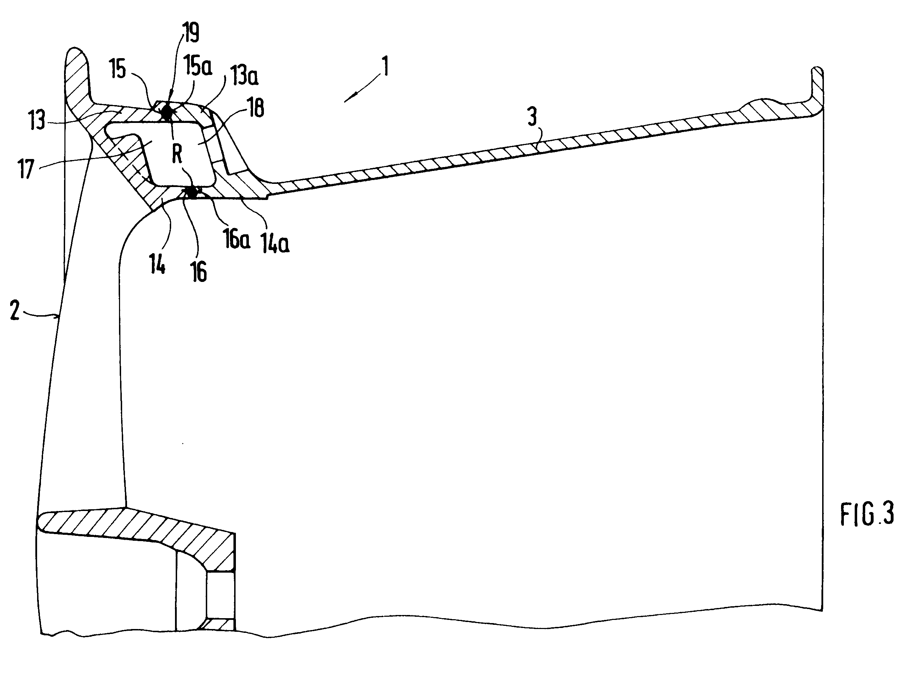

Wie z.B. aus den Fig. 1 und 3 in Verbindung mit Fig. 2 zu erkennen ist, endet der Hohlraum 27 der Speiche 8 im von den Teilräumen 17 und 18 gebildeten gemeinsamen Ringraum, so daß keine separate Abdichtung zum Reifen mehr erfolgen muß. Eine solche Gestaltung der Felge 1 wird im wesentlichen durch die Verbindung der Felgenteile 2 und 3 über die Reibschweißung R ermöglicht.

## Patentansprüche

1. Verfahren zum Herstellen einer Felge mit einer mehrere Hohlspeichen umfassenden Radschüssel in einem Kokillenwerkzeug, die mit einem Felgenbett verbunden ist, **dadurch gekennzeichnet,** daß die Radschüssel (2) mit dem aus einem Teil bestehenden Felgenbett (3) über eine Reibschweißung (R) im Bereich eines Felgenhornes (10) verbunden wird, wobei die Radschüssel (2) an einer Innenseite (S) mindestens zwei als Kreisringe (K) umlaufende ebene Schweißflächen (15, 16) aufweist, die korrespondierend zu zwei weiteren gegenüberstehenden ebenen Schweißflächen (15a, 16a) des Felgenbettes (3) angeordnet sind.

2. Verfahren zum Herstellen einer Felge mit einer mehrere Hohlspeichen umfassenden Radschüssel in einem Kokillenwerkzeug, die mit einem Felgenbett verbunden ist, **dadurch gekennzeichnet,** daß die Radschüssel (2) mit dem aus einem Teil bestehenden Felgenbett (3) über eine Reibschweißung (R) im Bereich eines Felgenhornes (10) verbunden wird, wobei die Radschüssel an einer Innenseite (S) nur eine als Kreisring (K) umlaufende ebene Schweißfläche (15 oder 16) aufweist, die korrespondierend zu einer gegenüberstehenden ebenen Schweißfläche (15a oder 16a) des Felgenbettes (3) angeordnet ist.

3. Felge, hergestellt nach dem Verfahren gemäß Anspruch 1, **dadurch gekennzeichnet,** daß die zwei umlaufenden Schweißflächen (15, 16) an Stirnseiten von Wandungen (13, 14) der Radschüssel (2) angeordnet sind, wobei die eine umlaufende Wandung (13) mit der Schweißfläche (15) einen größeren Durchmesser (D) aufweist als die weitere umlaufende Schweißfläche (16) an einer gegenüberstehenden Wandung (14) mit einem geringeren Durchmesser (d).

4. Felge, hergestellt nach dem Verfahren gemäß Anspruch 1, **dadurch gekennzeichnet,** daß die Schweißfläche (15) mit dem Durchmesser (D) in einer ersten Ebene (X-X) an der Innenseite (S) des Felgenhornes (10) und die weitere umlaufende Schweißfläche (16) in einer vorgelagerten zweiten Ebene (Y-Y) an der Innenseite (S) der Radschüssel (2) vorgesehen ist.

5. Felge, hergestellt nach dem Verfahren gemäß Anspruch 1, **dadurch gekennzeichnet,** daß die gegenüberstehenden Schweißflächen (15, 15a sowie 16, 16a) an den Stirnseiten der Wandungen (13 , 13a, und 14, 14a) sowohl an der Radschüssel (2) als auch am Felgenbett (3) in einer gemeinsamen Ebene angeordnet sind.

6. Felge, hergestellt nach dem Verfahren gemäß Ansprüche 1 oder 2, **dadurch gekennzeichnet,** daß die Hohlspeichen (8) der Radschüssel (2) mittels durch Mündungsöffnungen der Speichen (8) entfernbare Sandkerne (7; 7a; 7b; 7c) zwischen einem Unter- und Oberkern (5, 6) des Kokillenwerkzeuges (4) gebildet sind, wobei die Mündungsöffnungen sowie die umlaufenden Schweißflächen (15, 15a, 16, 16a) in einem etwa rechten Winkel zur zentrischen Felgenachse (F) angeordnet sind.

7. Felge, hergestellt nach dem Verfahren gemäß Anspruch 1, **dadurch gekennzeichnet,** daß zwischen den die Schweißflächen (15, 15a und 16, 16a) stirnseitig aufweisenden Wandungen (13, 13a, 14, 14a) an der Radschüssel (2) und am Felgenbett (3) jeweils gegeneinander gerichtete offene Teilringräume (17, 18) gebildet werden, die im verbundenen Zustand einen geschlossenen Ringraum darstellen, der mit den Innenräumen der Hohlspeichen (8) verbunden ist, wobei die eine außenliegende Wand (13a) des Teilringraumes (18) einen Hump (19) aufweist und die andere gegenüberliegende innere Wand (14a) als Aufnahmefläche für ein Ausgleichsgewicht dient.

8. Felge, hergestellt nach dem Verfahren gemäß Ansprüche 1 oder 2, **dadurch gekennzeichnet,** daß der Hump (19) in der äußeren Wandung (13a) des Felgenbettes (3) angeordnet ist, die mit der weiteren Wand (14a) den Teilringraum (18) einschließt.

9. Verfahren zum Herstellen einer Felge gemäß Anspruch 1, **dadurch gekennzeichnet,** daß das Felgenbett (3) aus einem stranggepreßten Rohrstück besteht, bei dem zur Bildung der beiden umlaufenden Schweißflächen (15a, 16a) das Rohr stirnseitig gespalten und der Spalt zur Erzielung korrespondierender Schweißflächen in den Wandungen (13a, 14a) aufgeweitet und nachfolgend eine Bearbeitungsschräge (26) vorgeformt und das Felgenbett durch Drückwalzen fertiggestellt wird.

10. Verfahren zum Herstellen einer Felge gemäß Anspruch 1, **dadurch gekennzeichnet,** daß das Felgenbett (3) aus einem gegossenen Rohling besteht, der über mehrere Rollen in einer Drückmaschine zu einem profilierten Felgenbett mit stirnseitigen Schweißflächen (15a, 16a) in den Wandungen (13a, 14a) umgeformt wird.

11. Verfahren zum Herstellen einer Felge gemäß der Ansprüche 1 oder 2, **dadurch gekennzeichnet,** daß der Sandkern (7) am Unterkern (5) des Kokillenwerkzeuges (4) im Bereich des Felgenhornes (10) und der Nabe (9) abgestützt ist, wobei der Sandkern (7) zwischen diesen Abstützungen freiliegend zum Unter- und Oberkern (5, 6) zur Bildung einer gleichbleibenden Wanddicke der Hohlspeichen (8) angeordnet ist.

12. Verfahren zum Herstellen einer Felge gemäß der Ansprüche 1 oder 2, **dadurch gekennzeichnet,** daß der Sandkern (7a) im Bereich des Felgenhornes (10) am Unterkern (5) abgestützt ist und mit seinen abgekehrten, zur Nabe (9) gerichteten Ende freiliegend zwischen den beiden Kernen (5 und 6) zur Bildung der gleichbleibenden Wanddicke der Hohlspeichen (8) angeordnet ist.

13. Verfahren zum Herstellen einer Felge gemäß der Ansprüche 1 oder 2, **dadurch gekennzeichnet,** daß der Sandkern (7b bzw. 7c) im Bereich des Felgenhornes (10) am Unterkern (5) und mit seinem gegenüberliegenden Ende in Ausnehmungen (12) des Unterkernes (5) abgestützt ist und der zwischen diesen beiden Abstützungen liegende Bereich des Sandkernes freiliegend zwischen dem Unterkern (5) und dem Oberkern (6) zur Bildung der gleichbleibenden Wanddicke der Hohlspeichen (8) angeordnet ist.

14. Felge, hergestellt nach dem Verfahren gemäß Ansprüche 1 oder 2, **dadurch gekennzeichnet,** daß die Felgenschüssel (2) und das Felgenbett (3) aus verschiedenen Werkstoffen bestehen und über die Reibschweißung (R) miteinander verbunden sind.

15. Felge, hergestellt nach dem Verfahren gemäß der Ansprüche 1 oder 2, **dadurch gekennzeichnet,** daß die Radschüssel (2) und das Felgenbett (3) jeweils aus einem gegossenen Teil bestehen.

16. Felge, hergestellt nach dem Verfahren gemäß der Ansprüche 1 oder 2, **dadurch gekennzeichnet,** daß die Radschüssel (2) gegossen ist und das Felgenbett (3) aus einem umgeformten Teil besteht.

## Claims

1. A method of producing a rim with a wheel dish comprising a plurality of hollow spokes in an ingot-mould tool, the wheel dish being joined to a rim base, **characterized in that** the wheel dish (2) is joined by way of a friction weld (**R**) in the region of a rim flange (10) to the rim base (3) constructed in one piece, wherein the wheel dish (2) is provided on an inner side (**S**) with at least two flat weld faces (15, 16) extending continuously as circular rings (**K**) and arranged so as to correspond to two further opposite flat weld faces (15a, 16a) on the rim base (3).

2. A method of producing a rim with a wheel dish comprising a plurality of hollow spokes in an ingot-mould tool, the wheel dish being joined to a rim base, **characterized in that** the wheel dish (2) is joined by way of a friction weld (**R**) in the region of a rim flange (10) to the rim base (3) constructed in one piece, wherein the wheel dish (2) is provided on an inner side (**S**) with only one flat weld face (15 or 16) extending continuously as a circular ring (**K**) and arranged so as to correspond to an opposite flat weld face (15a or 16a) on the rim base (3).

3. A rim produced in accordance with the method according to Claim 1, **characterized in that** the two continuously extending weld faces (15, 16) are arranged on front faces of walls (13, 14) of the wheel dish (2), wherein one continuously extending wall (13) with the welding face (15) has a greater diameter (**D**) than the further welding face (16) on an opposite wall (14) with a smaller diameter (**d**).

4. A rim produced in accordance with the method according to Claim 1, **characterized in that** the welding face (15) with the diameter (**D**) is provided in a first plane (**X-X**) on the inner side (**S**) of the rim flange (10) and the further continuously extending welding face (16) is provided in a second plane (**Y-Y**) situated in front on the inner side (**S**) of the wheel dish (2).

5. A rim produced in accordance with the method according to Claim 1, **characterized in that** the opposite welding faces (15, 15a and 16, 16a) on the front faces of the walls (13, 13a and 14, 14a) are situated in a common plane both on the wheel dish (2) and on the rim base (3).

6. A rim produced in accordance with the method according to Claim 1 or 2, **characterized in that** the hollow spokes (8) of the wheel dish (2) are formed between an upper and lower core (5, 6) of the ingot-mould tool (4) by means of sand cores (7; 7a; 7b; 7c) removable through openings in the spokes (8), wherein the openings and the continuously extending welding faces (15, 15a, 16, 16a) are situated at an angle substantially perpendicular to the central axis (**F**) of the rim.

7. A rim produced in accordance with the method according to Claim 1, **characterized in that** open, partially annular spaces (17, 18) respectively orientated towards one another are formed on the wheel dish (2) and on the rim base (3) between the walls (13, 13a, 14, 14a) provided on the front faces thereof with the welding faces (15, 15a and 16, 16a), the partially annular spaces (17, 18) forming when joined a closed annular space connected to the inner spaces in the hollow spokes (8), wherein one outward wall (13a) of the partially annular space (18) has a hump (19) and the other opposite inner wall (14a) acts as a receiving face for a compensating weight.

8. A rim produced in accordance with the method according to Claim 1 or 2, **characterized in that** the hump (10) is situated in the outer wall (13a) of the rim base (3) which with the further wall (14a) encloses the partially annular space (18).

9. A method of producing a rim according to Claim 1, **characterized in that** the rim base (3) comprises an extruded tubular member, wherein, in order to form the two continuously extending welding faces (15a, 16a), the tube is split at the front end thereof and the gap is widened to produce corresponding welding faces in the walls (13a, 14a) and a machining slope (26) is then formed in front and the rim base is finished by pressing rollers.

10. A method of producing a rim according to Claim 1, **characterized in that** the rim base (3) comprises a cast blank which is deformed by way of a plurality of rollers in a pressing machine to form a profiled rim base with front welding faces (15a, 16a) in the walls (13a, 14a).

11. A method of producing a rim according to Claim 1 or 2, **characterized in that** the sand core (7) is supported on the lower core (5) of the ingot-mould tool (4) in the region of the rim flange (10) and the hub (9), wherein the sand core (7) is arranged between the said supports freely with respect to the lower and upper cores (5, 6) so as to form a constant wall thickness of the hollow spokes (8).

12. A method of producing a rim according to Claim 1 or 2, **characterized in that** the sand core (7a) is supported on the lower core (5) in the region of the rim flange (10), and is arranged with its remote end facing the hub (9) freely between the two cores (5 and 6) so as to form the constant wall thickness of the hollow spokes (8).

13. A method of producing a rim according to Claim 1 or 2, **characterized in that** the sand core (7b and 7c respectively) is supported on the lower core (5) in the region of the rim flange (10) and at its opposite end in recesses (12) in the lower core (5), and the region of sand core situated between the said two supports is arranged freely between the lower core (5) and the upper core (6) so as to form the constant wall thickness of the hollow spokes (8).

14. A rim produced in accordance with the method according to Claim 1 or 2, **characterized in that** the wheel dish (2) and the rim flange (3) consist of different materials and are joined to each other by way of the friction weld (**R**).

15. A rim produced in accordance with the method according to Claim 1 or 2, **characterized in that** the wheel dish (2) and the rim flange (3) each comprise a cast part.

16. A rim produced in accordance with the method according to Claim 1 or 2, **characterized in that** the wheel dish (2) is cast and the rim flange (3) comprises a re-shaped part.

## Revendications

1. Procédé de fabrication d'une jante avec un voile de roue comprenant plusieurs rayons creux, dans un outil à coquille, relié à un fond de jante, caractérisé en ce que le voile de roue (2) est relié au fond de jante (3) constitué d'une seule pièce par l'intermédiaire d'une soudure par friction (R) faite dans la zone d'un rebord de jante (10), le voile de roue (2) présentant sur sa face intérieure (S) au moins deux faces de soudage (15, 16) planes faisant le pourtour sous forme d'anneaux circulaires (K), disposées de façon correspondante à deux autres faces de soudage (15a, 16a) planes placées en regard du fond de jante (3).

2. Procédé de fabrication d'une jante avec un voile de roue comprenant plusieurs rayons creux dans un outil à coquille relié à un fond de jante, caractérisé en ce que le voile de roue (2) est relié au fond de jante (3) constitué d'une seule pièce par l'intermédiaire d'une soudure à friction (R) faite dans la zone d'un rebord de jante (10) le voile de roue présentant sur une face intérieure (s) seulement une face de soudage (15 ou 16) plane faisant le pourtour sous forme d'anneau circulaire (K), disposée de façon correspondante à une face de soudage (15a ou 16a) plane placée en regard du fond de jante (3).

3. Jante, fabriquée selon le procédé suivant la revendication 1, caractérisée en ce que les deux faces de soudage (15, 16) de pourtour sont disposées sur les faces frontal es de parois (13, 14) du voile de roue (2) une paroi de pourtour (13), dotée de la surface de soudage (15), présentant un diamètre (D) supérieur à celui de l'autre face de soudage de pourtour (16) située sur une paroi (14) en regard et ayant un diamètre inférieur (d).

4. Jante, fabriquée suivant le procédé selon la revendication 1, caractérisée en ce que la face de soudage (15) ayant le diamètre (D) est prévue dans un premier plan (X-X) placé en face inférieure (S) du rebord de jante (10) et l'autre face de soudage de pourtour (16) est prévue dans un deuxième plan (Y-Y) placé devant, sur la face intérieure (S) du voile de roue (2).

5. Jante, fabriquée suivant le procédé selon la revendication 1, caractérisée en ce que les faces de soudage (15, 15a ainsi que 16, 16a) placées en regard, sont disposées sur les faces frontales des parois (13, 13a et 14, 14a) ainsi que sur le voile de roue (2) ainsi qu'également sur le fond de jante (3), dans un plan commun.

6. Jante, fabriquée suivant le procédé selon les revendications 1 ou 2, caractérisée en ce que les rayons creux (8) du voile de roue (2) sont constitués au moyen de noyaux en sable (7; 7a; 7b; 7c) pouvant être enlevés par des ouvertures de passage des rayons (8) et ménagés entre un noyau inférieur et un noyau supérieur (5, 6) de l'outil à coquille (4), les ouvertures d'embouchure ainsi que les faces de soudage (15, 15a, 16, 16a) de pourtour étant disposées à peu près à angle droit par rapport à l'axe de jante (F) passant par le centre.

7. Jante, fabriquée suivant le procédé selon la revendication 1, caractérisée en ce qu'entre les parois (13, 13a, 14, 14a) présentant frontalement les faces de soudage (15, 15a et 16, 16a), sur le voile de roue (2) et sur le fond de jante (3) sont chaque fois constituées des espaces en anneaux partiels (17, 18) ouverts, orientés respectivement les uns vers les autres, constituant à l'état relié un espace annulaire fermé relié aux espaces intérieurs des rayons creux (8), une paroi (13a) extérieure de l'espace en anneau partiel (18) présentant un épaulement (19) et l'autre paroi intérieure (14a) placée en regard servant de face de réception pour une masselotte d'équilibrage.

8. Jante, fabriquée suivant le procédé selon les revendications 1 ou 2, caractérisée en ce que l'épaulement (19) est disposé dans la paroi extérieure (13a) du fond de jante (3) faisant avec l'autre paroi (14a) l'espace annulaire partiel (18).

9. Procédé de fabrication d'une jante selon la revendication 1, caractérisé en ce que le fond de jante (3) est constitué d'une pièce tubulaire obtenue par extrusion, pour laquelle, pour constituer les deux faces de soudage (15a, 16a) de pourtour, le tube est fendu frontalement et l'interstice étant agrandi pour obtenir des faces de soudage correspondantes dans les parois (13a, 14a) puis un chanfrein d'usinage (26) étant préformé et la fabrication du fond de jante étant achevé par laminage.

10. Procédé de fabrication d'une jante selon la revendication 1, caractérisé en ce que le fond de jante (3) est constitué d'une ébauche coulée qui est passée par plusieurs rouleaux dans une machine de pressage pour donner un fond de jante profilé avec des faces de soudage (15a, 16a) frontales, ménagées dans les parois (13a, 14a).

11. Procédé de fabrication d'une jante selon la revendication 1 ou 2, caractérisé en ce que le noyau en sable (7) prend appui sur le noyau inférieur (5) de l'outil à coquille (4) dans la zone du rebord de jante (10) et du moyeu (9), le noyau en sable (7) étant disposé entre ces appuis, libre par rapport aux noyaux inférieur et supérieur (5, 6) pour constituer une épaisseur de paroi constante pour les rayons creux (8).

12. Procédé de fabrication d'une jante selon les revendications 1 ou 2, caractérisé en ce que le noyau en sable (7a) prend appui dans la zone du rebord de jante (10) sur le noyau inférieur (5) et est disposé par son extrémité inversée, orientée vers le moyeu (9), libre, entre les deux noyaux (5 et 6) pour constituer l'épaisseur de paroi constante des rayons creux (8).

13. Procédé de fabrication d'une jante selon les revendications 1 ou 2, caractérisé en ce que le noyau en sable (7b, ou 7c) prend appui dans la zone du rebord de jante (10) sur le noyau inférieur (5) et par son extrémité opposée dans des évidements (12) du noyau inférieur (5) et la zone, située entre ces deux appuis, du noyau en sable étant disposée libre entre le noyau inférieur (5) et le noyau supérieur (6) pour constituer l'épaisseur de paroi constante des rayons creux (8).

14. Jante, fabriquée suivant le procédé selon les revendications 1 ou 2, caractérisée en ce que le voile de roue (2) et le fond de jante (3) sont constitués de matériaux différents et sont reliés ensemble par la soudure à friction (R).

15. Jante, fabriquée suivant le procédé selon la revendication 1 ou 2, caractérisée en ce que le voile de roue (2) et le fond de jante (3) sont chacun constitués d'une partie moulée.

16. Jante, fabriquée suivant le procédé selon la revendication 1 ou 2, caractérisée en ce que le voile de roue (2) est coulé et le fond de jante (3) est constitué d'une pièce formée par emboutissage.
